# EUROPÄISCHE PATENTSCHRIFT

(11) **EP 1 959 195 B1**
(45) Veröffentlichungstag und Bekanntmachung des Hinweises auf die Patenterteilung: **28.12.2011**
(21) Anmeldenummer: 08002787.3
(22) Anmeldetag: 15.02.2008
(51) Int. Cl.: F23J 15/04

(54) **Verfahren zur Regelung der Temperatur von Rauchgas**
Method for regulating the temperature of flue gas
Procédé de réglage de la température de gaz de fumées

(30) Priorität: 15.02.2007 DE 102007008068
(43) Veröffentlichungstag der Anmeldung: 20.08.2008
(73) Patentinhaber: Labuschewski, Jürgen, 58638 Iserlohn (DE); HEB GmbH Hagener Entsorgungsbetrieb, 58089 Hagen (DE)
(72) Erfinder: Labuschewski, Jürgen, 58638 Iserlohn (DE)
(74) Vertreter: Radünz, Ingo

(56) Entgegenhaltungen:
- DE-C1- 4 007 635
- DE-U1-202005 018 301
- GB-A- 1 326 658
- US-A- 4 270 467

## Beschreibung

Die Erfindung betrifft ein Verfahren zur Regelung der Temperatur eines mit Flugstaub und/oder mit Schadgasen beladenen Rauchgases mit den Merkmalen des Oberbegriffes des Anspruches 1.

Es sind zahlreiche Feuerungsanlagen bekannt, in denen Brennstoffe wie Kohle, Braunkohle, Öl, aber auch Müll und Ersatzbrennstoffe verbrannt werden. Die in den Rauchgasen enthaltene Energie wird in der nachgeschalteten Kesselanlage in Dampf umgewandelt. Die Leistung der Feuerungsanlage kann je nach der Art des Brennstoffes und dessen Heizwert sowie den verschiedenen Lastzuständen der Kesselanlage sehr schwanken. Dadurch können die Rauchgastemperaturen in der Kesselanlage ebenfalls erheblich schwanken.

Bedingt durch gesetzliche Vorschriften, wie die 17. deutsche Bundesimmissionsschutz-Verordnung müssen im Bereich der Müllverbrennungsanlagen die Feuerungen mit einer Nachverbrennungszone ausgerüstet werden, die es ermöglicht, eine Temperatur von mindestens 850°C über eine Zeit von mindestens zwei Sekunden lang zu halten. Das führte dazu, dass bei bekannten, bereits in Betrieb befindlichen Dampferzeugern Teile der nicht mit Berührungsheizflächen versehenen Rauchgaszüge (Leerzüge) isoliert wurden, um den Wärmeübergang in diesen Rauchgaszügen zu verhindern. Die Kesselanlage wurde durch diese Maßnahme nicht vergrößert. Vielmehr wurde das Temperaturniveau erhöht und weiter in den Kessel hinein verlagert. Aus diesen Gründen kommt es immer wieder in vielen Kesselanlagen vor, dass der Temperaturverlauf im Kessel nicht den optimalen Auslegungen entspricht. Die Folge sind teilweise erhebliche Anbackungen an den Berührungsheizflächen oder Hochtemperaturkorrosionen, die dazu führen, dass entweder der Wirkungsgrad oder die Reisezeiten der Kesselanlage erheblich beeinträchtigt werden. Der gleiche Effekt kann auch bei neueren Kesselanlagen festgestellt werden, die zwar über einen entsprechenden Nachverbrennungsraum verfügen, bei plötzlichen Heizwerterhöhungen in der Feuerungsanlage aber über den Auslegungsfall der Kesselanlage hinaus belastet werden.

Zur Reinigung der Heizflächen von Dampfkesselanlagen sind Russbläser, wie Wasserbläser oder andere Sprüheinrichtungen, bekannt, die während des Betriebes der Kesselanlage dazu benutzt werden, Beläge von den Rohren der Heizflächen oder den Rohrwänden abzuspülen oder abzublasen. Dabei werden die Verschmutzungen chargenweise entfernt, um den Wärmeübergang und den Wirkungsgrad des Dampfkessels zu verbessern.

Bei bekannten Verfahren zur Verminderung des NOₓ-Gehaltes in Rauchgasen, wie das SNCR-Verfahren, werden in Wasser gelöste NOₓ-Reduktionsmittel, teilweise noch mit weiteren Chemikalien oder Additiven vermischt, in temperaturbegrenzten Bereichen des Dampfkessels eingedüst.

Aus der US-PS 4,270,467 ist ein System für die Verbrennung von Abfallprodukten bekannt, die sich auf eine Regelung der Verbrennung in einer Wirbelschicht bezieht. Dazu wird Primärluft zur Unterstützung der Verbrennung des Abfallbrennstoffs auf einer Feuerrostanlage durch Lufteinlässe unterhalb des Feuerrostes eingeblasen. Weiterhin sind Zündbrenner an mehreren Stellen zur Einleitung und kontrollierten Aufrechterhaltung des Verbrennungsverfahrens an verschiedenen senkrechten Ebenen der Brennkammer angeordnet. Weiter ist die Anordnung im Zusammenhang mit dem Gas- und Luftfluss zur Regelung der Temperaturen vorgesehen. Darüber hinaus sind Kühleinlässe für eine zusätzliche Regelung der Verbrennungstemperaturen und weiterhin Lufteinlasse oberhalb der Zündbrenner in der Brennkammer angeordnet. Eine Abgasleitungsstufe zum Weiterleiten der Verbrennungsprodukte aus der Brennkammer ist mit einem Regeneratorzweig am Ende der Abgasleitungsstufe ausgebildet, die mit einem Wärmetauscher verbunden ist.

Weiterhin ist aus der DE 20 2005 018 301 U1 eine Vorrichtung zur Verbrennung von Abfällen bekannt, bei der in das den Verbrennungsraum verlassende Rauchgas vor dessen Eintritt in den nachgeschalteten Wärmetauscher Nasser eingesprüht wird. Dabei wird bei Erreichen einer thermischen Grenzlast dem Rauchgas Energie entzogen, wodurch in erwünschter Weise eine Verminderung der Zuführrate des Abfallstoffes verhindert wird. Damit soll der Durchsatz an Abfall bei einer bestehenden Anlage gesteigert oder konstant gehalten werden. Die Regelung der eingesprühten Wassermenge erfolgt in Abhängigkeit von der thermischen Last des Wärmetauschers. Eine zweite Regeleinrichtung regelt die Zuführrate des zu verbrennenden Abfalls in Abhängigkeit von der thermischen Last des Wärmetauschers.

Der Erfindung liegt die Aufgabe zugrunde, ein Verfahren zu schaffen, bei dem auch bei schwankenden Feuerleistungen eines Dampfkessels Anbackungen und Korrosion auf und an den Berührungsheizflächen im wesentlichen verhindert werden.

Die Aufgabe wird bei einem gattungsgemäßen Verfahren erfindungsgemäß durch die kennzeichnenden Merkmale des Anspruches 1 gelöst.

Übersteigt - bedingt durch den plötzlichen Auftritt eines überhöhten Heizwertes im Brennstoff - die Temperatur des Rauchgases vor dessen Kontakt mit den Berührungsheizflächen den vorgegebenen Wert, so wird dem Rauchgas durch die für die Verdampfung des eingesprühten Wassers notwendige Energie entsprechend Warme entzogen und dadurch die Temperatur auf einen optimalen Wert eingeregelt. Die optimale Temperatur liegt unterhalb des Erweichungspunktes des bei der Verbrennung des jeweiligen Brennstoffes anfallenden Flugstaubes. Durch diese Optimierung der Rauchgastemperatur wird der vom Rauchgas mitgeführte Flugstaub soweit abgekühlt, dass er nicht mehr an den Heizflächen anbacken kann, sondern staubförmig anfällt und über die vorgesehenen Abzugsorgane abgeführt werden kann.

Durch die Wassereindüsung wird die Leistung des Dampfkessels teilweise beeinträchtigt. Deshalb wurde bisher in der Fachwelt auch nicht gewünscht, die Temperatur des Rauchgases durch Einsprühen von Wasser zu regulieren und damit die nutzbare, im Rauchgas vorhandene Energie zu reduzieren. Gemäß dem erfindungsgemäßen Verfahren wird jedoch durch die Vermeidung oder die Verhinderung der Bildung von Anbackungen auf den Berührungsheizflächen oder der Korrosion an den Berührungsheizflächen deren Verfügbarkeit sowie ein besserer Wärmeübergang vom Rauchgas auf die Berührungsheizflächen erzielt und dadurch ein erheblicher Vorteil erwirtschaftet.

Mit dem erfindungsgemäßen Verfahren können gezielt Schwachstellen im Dampfkessel, die verschiedene Ursachen haben können, ausgeglichen werden. Solche Schwachstellen können sein:
- Ältere Dampfkessel, die unter anderen Voraussetzungen betrieben werden als ursprünglich geplant.
- Müllkessel, die unter gesetzlichen Neuregelungen anders betrieben werden müssen.
- Der Einsatz anderer Brennstoffe in einem bestehenden Dampfkessel.
- Bei Falschauslegung von Dampfkesseln und wenn die Theorie mit der Praxis nicht übereinstimmt.

Ein Ausführungsbeispiel der Erfindung wird anhand eines in der Zeichnung dargestellten Ausführungsbeispiels näher erläutert. Es zeigen:
- Fig. 1: die Prinzipskizze eines Dampfkessels und
- Fig. 2: das Schaltschema zur Regelung der Rauchgastemperatur in einem Dampfkessel nach Fig. 1.

Ein Dampfkessel 1 besteht aus einem Verbrennungsraum 2 mit einer Walzenrostfeuerung 3 zur Verbrennung von Abfallstoffen mit je nach Anlieferung stark schwankendem Heizwert. In den Seitenwänden des Verbrennungsraumes 2 sind Seitenwandbrenner 4 und in der Decke des Verbrennungsraumes sind Deckenbrenner 5 zur wahlweisen Zuführung von Verbrennungsluft und Zusatzbrennstoff angeordnet.

Der Verbrennungsraum 2 geht in eine Nachbrennzone 6 über, die so ausgelegt ist, dass das durch die Verbrennung entstandene Rauchgas dort für eine Dauer von mindestens zwei Sekunden bei einer Temperatur von mindestens 850°C verweilen kann. In der Nachbrennzone 6 können auch andere mit der Genehmigungsbehörde vereinbarte verbrennungsbedingungen hinsichtlich Mindesttemperatur und Mindestverweilzeit eingestellt werden.

An die Nachbrennzone 6 sind mehrere Rauchgaszüge 7.1, 7.2 , 7.3 angeschlossen, die durch Rohrwände 8 begrenzt sind. Zumindest in dem letzten Rauchgaszug 7.3 sind Berührungsheizflächen 9 angeordnet, während der erste und der zweite Rauchgaszug 7.1, 7.2 als Leerzüge ohne Berührungsheizflächen ausgebildet sind.

In einem solchen Dampfkessel 1 mag aufgrund der Kesselauslegung die Temperatur des Rauchgases vor deren Kontakt mit den Berührungsheizflächen 9 je nach dem Heizwert und der eingespeisten Menge des verwendeten Brenn- oder Abfallstoffes bei etwa 650 bis 750°C liegen. Bei dieser Temperatur ist in den Rauchgasen enthaltener Flugstaub noch so warm, dass sein Schlackenerweichungspunkt überschritten ist und der Flugstaub noch in einer sehr teigigen Form vorliegt und an den Berührungsheizflächen 9 sehr gut anhaften kann. Die so entstehenden Beläge verbacken die Bündelrohre der Berührungsheizflächen 9, so dass die Dampfkesselanlage bereits nach kurzer Betriebszeit gereinigt werden muss. Außerdem besteht bei der genannten Rauchgastemperatur die Gefahr, dass die Oberflächentemperatur der Kesselrohre, z. B. die der Rohre der Berührungsheizflächen 9, die Temperatur übersteigt, bei der eine Korrosion aufgrund der in dem Rauchgas enthaltenen Schadgase, wie Chlorverbindungen oder Schwefeldioxid auftritt.

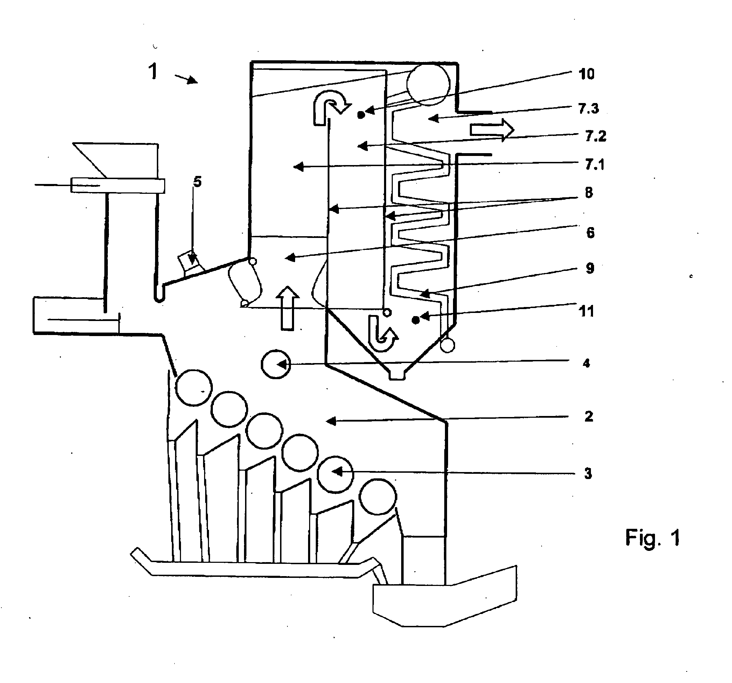

In dem ersten oder zweiten Rauchgaszug 7.1, 7.2 sind in Strömungsrichtung des Rauchgases, wie durch Pfeile angedeutet, vor den Berührungsheizflächen 9 Wasserlanzen 10 angeordnet, die die Wand des betreffenden Rauchgaszuges 7.1, 7.2 durchdringen. Gemäß Fig. 1 befinden sich die Wasserlanzen 10 im Eingangsbereich des zweiten Rauchgaszuges 7.2. Durch die Wasserlanzen 10 wird fein verdüstes Wasser in den Rauchgastrom eingeblasen. Dadurch wird die Temperatur des Rauchgases gesenkt.

Ein oder mehrere Temperaturmessfühler 11 zur Erfassung der aktuellen Temperatur des Rauchgases sind stromabwärts von den Wasserlanzen 10 und in Strömungsrichtung vor den Berührungsheizflächen 9 vorgesehen. Wie in Fig. 1 zu erkennen ist, befinden sich die Temperaturmessfühler 11 im Eintrittsbereich des dritten, die Berührungsheizflächen 9 aufnehmenden Rauchgaszuges 7.3.

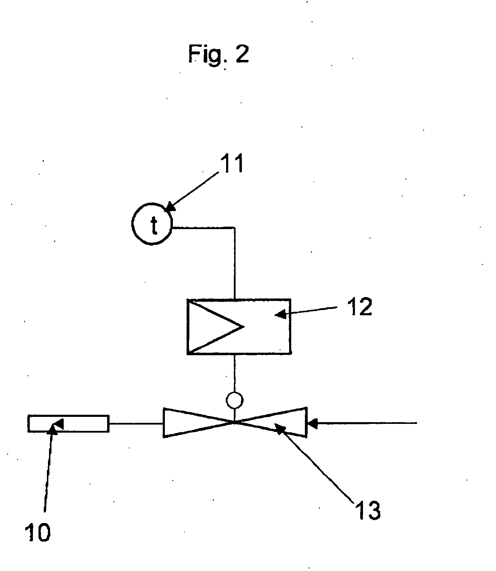

Über eine Regelstrecke nach Fig. 2, bestehend aus dem oder den Temperaturmessfühlern 11, einem Regler 12 und in den Zuleitungen zu den Wasserlanzen 10 angeordneten Wasserregelventilen 13, wird die Menge des in das Rauchgas einsprühten Wassers geregelt. Dabei wird die Temperatur des Rauchgases an dem Ort der Temperaturmessfühler 11 auf einen solchen Wert absenkt und eingeregelt, der unterhalb des Erweichungspunktes des von dem Rauchgas mitgeführten Flugstaubes bzw. unterhalb der kritischen Oberflächentemperatur der Berührungsheizflächen 9 in Bezug auf Hochtemperaturkorrosion liegt.

Die Temperatur des Rauchgases wird an dem Ort der Temperaturmessfühler 11 vorzugsweise auf einen Wert unterhalb von 650 °C abgesengt und eingeregelt, so dass der Wert unterhalb des Erweichungspunktes des von dem Rauchgas mitgeführten Flugstaubes oder unterhalb der kritischen Oberflächentemperatur der Berührungsheizflächen 9 in Bezug auf Hochtemperaturkorrosion zu liegen kommt.

## Patentansprüche

1. Verfahren zur Regelung der Temperatur eines mit Flugstaub und/oder Schadgasen beladenen Rauchgases in einem Dampfkessel (1) mit einem Verbrennungsraum (2), einer Nachbrennzone (6) und einem oder mehreren Rauchgaszügen (7.1, 7.2, 7.3), in deren zumindest letztem Rauchgaszug (7.3) Berührungsheizflächen (9) angeordnet sind, wobei in der Nachbrennzone (6) eine Mindesttemperatur des Rauchgases eingehalten wird und wobei in das Rauchgas Wasser eingesprüht wird, **dadurch gekennzeichnet, dass** an einer oder mehreren Stellen in den Rauchgaszügen (7.1, 7.2) zwischen der Nachbrennzone (6) und den Berührungsheizflächen (9) die Temperatur des Rauchgases gemessen wird und dass das Wasser in einer solchen vorbestimmten Menge in den Rauchgaszug (7.2) eingesprüht wird, der vor dem mit Berührungsheizflächen (9) versehenen Rauchgaszug (7.3) angeordnet ist, dass die unmittelbar vor den Berührungsheizflächen (9) mit Temperaturfühlern (11) gemessen Temperatur des Ranchgases, aus einen Wert unterhalb von 650 °C abgesenkt und eingesegelt wird, so dass sie unterhalb des Erweichungspunktes des von dem Rauchgas mitgeführten Flugstaubes und/oder unterhalb der kritischen Oberflächentemperatur der Kesselrohre in Bezug auf Hochtemperaturkorrosion liegt.

## Claims

1. A method for regulating the temperature of a flue gas loaded with flue dust and/or pollutant gases in a boiler (1) having a combustion chamber (2), a post-combustion zone (6) and one or more flue gas lines (7.1, 7.2, 7.3), wherein heating surfaces (9) are arranged in at least the final flue gas line (7.3), wherein a minimum temperature is maintained for the flue gas in the post-combustion zone (6) and wherein water is sprayed into the flue gas, **characterized in that** the temperature of the flue gas is measured at one or more locations in the flue gas lines (7.1, 7.2) between the post-combustion zone (6) and the heating surfaces (9), and **in that** the water is sprayed into the flue gas line (7.2), which is arranged upstream of the flue gas line (7.3) provided with heating surfaces (9), in a predetermined quantity such that the temperature of the flue gas, measured with temperature sensors (11) which are directly upstream of the heating surfaces (9), is reduced and regulated to a value which is below 650°C so that it is below the softening point of the flue dust entrained in the flue gas and/or is below the critical surface temperature of the boiler tube pertaining to high temperature corrosion.

## Revendications

1. Procédé de régulation de la température de fumées chargées de poussières en suspension et/ou de gaz nocifs, au sein d'une chaudière à vapeur (1) comportant un foyer (2), une zone de post-combustion (6) et un ou plusieurs carneaux (7.1, 7.2, 7.3) dont au moins le dernier carneau (7.3) est pourvu de surfaces de chauffage de contact (9), lesdites fumées conservant une température minimum dans la zone de post-combustion (6) et de l'eau étant injectée dans lesdites fumées, **caractérisé en ce que**, à un ou à plusieurs niveaux situés entre la zone de post-combustion (6) et les surfaces de chauffage de contact (9), la température desdites fumées est mesurée au sein des carneaux (7.1, 7.2) et que ladite eau est injectée dans le carneau (7.2) disposé en amont du carneau (7.3) pourvu de surfaces de chauffage de contact (9) dans une quantité déterminée préalablement de façon à ce que la température des fumées, mesurée avec des capteurs de température (11) placés directement en amont des surfaces de chauffage de contact (9), est diminuée et stabilisée à une valeur inférieure à 650 °C afin qu'elle reste inférieure au point de ramollissement des poussières en suspension charriées par lesdites fumées et/ou inférieure à la température critique de la surface du tube de chaudière en ce qui concerne la corrosion à haute température.
